# FASCICULE DE BREVET EUROPEEN

(11) **EP 0 462 896 B1**
(45) Date de publication et mention de la délivrance du brevet: **02.03.1994**
(21) Numéro de dépôt: 91401655.5
(22) Date de dépôt: 19.06.1991
(51) Int. Cl.: G01P 1/04

(54) **Embout perfectionné de flexible d'entraînement pour indicateur de vitesse de véhicule automobile**
Verbesserte Kupplung für einen biegsamen Antrieb eines Kraftfahrzeuggeschwindigkeitsanzeigers
Improved flexible drive connector for an automobile speed indicator

(30) Priorité: 19.06.1990 FR 9007652
(43) Date de publication de la demande: 27.12.1991
(73) Titulaire: JAEGER, F-92303 Levallois-Perret (FR)
(72) Inventeur: Jaunet, Jean-Claude, F-91370 Verrières le Buisson (FR); Drablier, Geneviève, F-92800 Puteaux (FR)
(74) Mandataire: Martin, Jean-Jacques

(56) Documents cités:
- FR-A- 2 219 700
- FR-A- 2 577 678
- PATENT ABSTRACTS OF JAPAN vol. 8, no. 125 (P-279)(1562) 12 Juin 1984 & JP-A-59 28 665

## Description

La présente invention concerne le domaine des embouts de flexibles d'entraînement destinés à être fixés sur les prises de mouvement d'indicateurs de vitesse de véhicules automobiles.

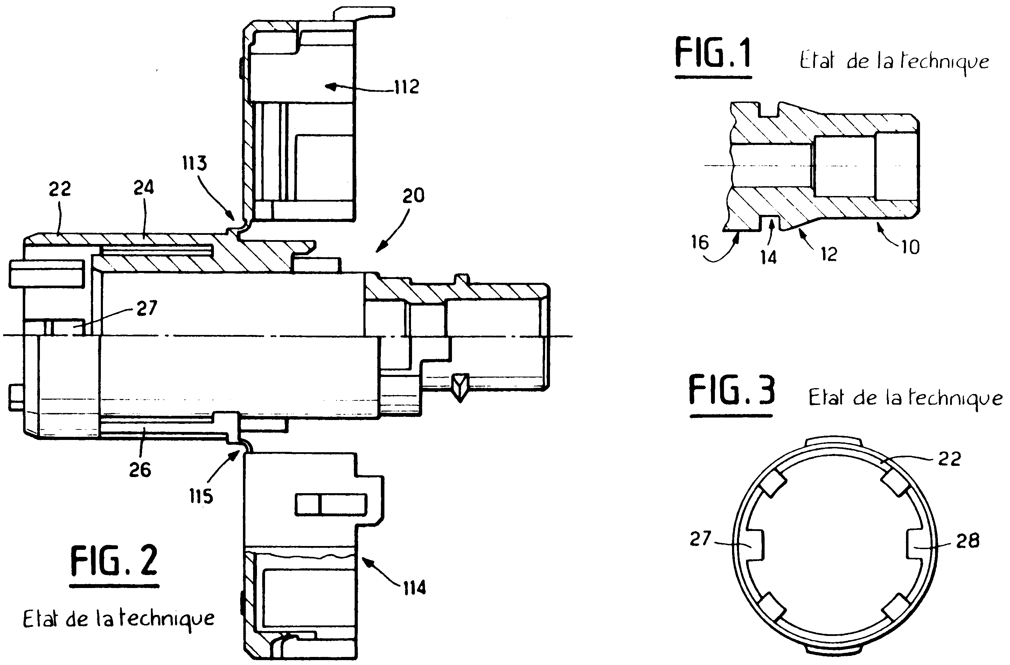

Les prises de mouvement d'indicateurs de vitesse comprennent généralement, pour la réception des embouts de flexibles d'entraînement, un canon solidaire du boîtier logeant l'indicateur de vitesse et qui comporte de son extrémité libre vers ledit boîtier, comme représenté en coupe axiale sur la figure 1 annexée : un fût cylindrique de révolution 10, une portion tronconique 12 divergente vers le boîtier, une gorge 14 de section droite rectangulaire et un second fût cylindrique de révolution 16.

Ces prises de mouvement sont par exemple définies par la norme française NF R 14-216.

La gorge 14 permet la fixation mécanique d'un embout de flexible sur le canon.

Diverses structures d'embouts de flexible ont été proposées à cette fin.

La Demanderesse a en particulier commercialisé depuis plusieurs années un embout de flexible, représenté selon une vue partiellement en coupe axiale sur la figure 2 annexée et en bout sur la figure 3 annexée, comprenant un boîtier 20 muni à son extrémité avant d'un anneau de verrouillage 22. Cet anneau de verrouillage est cylindrique de révolution au repos. Il est relié au boîtier 20 de l'embout par deux languettes longitudinales 24, 26. L'anneau de verrouillage 22 est muni sur sa surface interne de deux dents en saillie 27, 28, diamétralement opposées, destinées à être engagées dans la gorge 14 du canon de la prise de mouvement.

Le verrouillage est obtenu par simple enfoncement de l'embout de flexible sur la prise de mouvement. Au cours de cet enfoncement, l'anneau de verrouillage 22 se déforme élastiquement et tend à s'ovaliser, lorsque les dents 27, 28 se déplacent sur la portion tronconique 12. L'anneau de verrouillage 22 recouvre sa forme cylindrique lorsque les dents de verrouillage 27, 28 tombent dans la gorge 14.

Lorsqu'un déverrouillage est rendu nécessaire par exemple lors d'une opération de réparation, l'opérateur agit manuellement sur l'anneau 22 pour déformer à nouveau celui-ci de sorte que les dents de verrouillage 27, 28 sortent de la gorge 14.

Un tel verrouillage et déverrouillage est aussi connu de FR-A-2219700.

Ces structures d'embouts de flexibles connues ont déjà rendu de grands services.

La présente invention se propose cependant de perfectionner les dispositifs connus.

Un but principal de la présente invention est de proposer une nouvelle structure d'embout de flexible permettant un déverrouillage plus facile.

Un but auxiliaire de la présente invention est de proposer une nouvelle structure d'embout de flexible permettant un déverrouillage à distance, c'est-à-dire permettant un déverrouillage de l'embout de flexible sans que l'opérateur ait directement accès à la zone de verrouillage de l'embout de flexible placée en regard de la gorge ménagée dans le canon de la prise de mouvement.

Ces buts sont atteints selon la présente invention grâce à un embout de flexible destiné à être fixé sur une prise de mouvement d'indicateur de vitesse, comprenant de façon connue en soi un boîtier muni à son extrémité avant d'un anneau de verrouillage pourvu de deux dents en saillie diamétralement opposées aptes à pénétrer dans une gorge d'un canon de la prise de mouvement caractérisé par le fait que l'embout comprend en outre un manchon conçu pour être déplacé à translation sur le boîtier entre une position de repos dans laquelle le manchon n'agit pas sur l'anneau de verrouillage et une position de travail dans laquelle le manchon sollicite l'anneau de verrouillage à la déformation de sorte que les dents de verrouillage sortent de la gorge ménagée dans le canon de la prise de mouvement.

Selon une caractéristique avantageuse de la présente invention, le manchon est formé d'un élément cylindrique de révolution muni de deux dentures internes aptes à solliciter deux régions diamétralement opposées de l'anneau de verrouillage équidistantes desdites dents de verrouillage.

D'autres avantages de la présente invention apparaîtront à la lecture de la description détaillée qui va suivre, et en regard des dessins annexés, donnés à titre d'exemple non limitatif et sur lesquels :
- la figure 1 précédemment décrite représente une vue schématique en coupe axiale d'un canon de prise de mouvement d'indicateur de vitesse connu,
- la figure 2 précédemment décrite représente selon une vue partiellement en coupe un embout de flexible conforme à l'état de la technique,
- la figure 3 précédemment décrite représente une vue en bout du même dispositif connu,
- la figure 4 représente une vue en coupe axiale d'un embout conforme à la présente invention,
- la figure 5 représente une vue en bout, selon la vue référencée V sur la figure 4 du dispositif conforme à la présente invention, et
- les figures 6 et 7 représentent des vues partielles en section axiale du manchon conforme à la présente invention référencées respectivement VI-VI et VII-VII sur la figure 5.

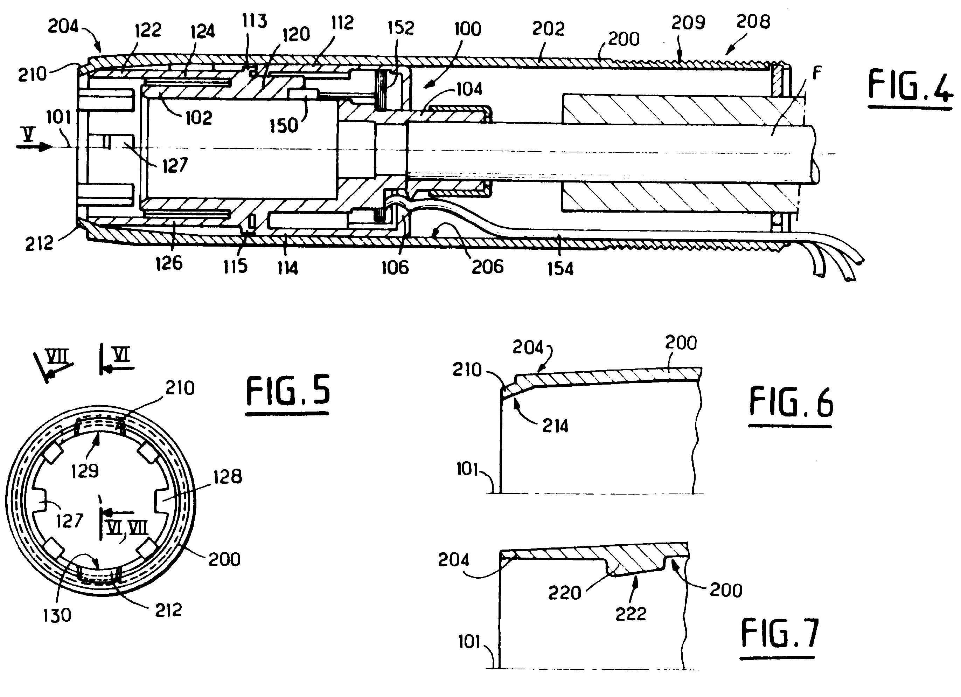

On aperçoit sur la figure 4 annexée un embout de flexible conforme à la présente invention comprenant essentiellement un boîtier 100 et un manchon 200.

Le boîtier 100 peut faire l'objet de nombreux modes de réalisation.

De préférence le boîtier 100 correspond au dispositif commercialisé par la Demanderesse depuis plusieurs années et repésenté sur les figures 2 et 3 annexées.

Comme indiqué précédemment le boîtier 100 est muni à son extrémité avant d'un anneau de verrouillage 122 pourvu sur sa surface interne de deux dents diamétralement opposées 127, 128 aptes à pénétrer dans la gorge 14 du canon de la prise de mouvement. De préférence l'anneau de verrouillage 122 est relié au boîtier 120 par deux languettes longitudinales 124, 126. Les languettes 124, 126 sont avantageusement disposées à 90° des dents 127, 128, c'est-à-dire qu'elles se raccordent sur des zones de l'anneau de verrouillage 122, qui sont diamétralement opposées entre elles et équidistantes des dents 127, 128.

De préférence le boîtier 100 est muni à son extrémité avant d'une structure annulaire 102 apte à venir en appui contre la portion tronconique 12 du canon pour servir de butée axiale au boîtier et définir avec précision la position axiale de l'embout de flexible par rapport à la prise de mouvement de l'indicateur de vitesse. La structure 102 est placée en retrait vers l'arrière par rapport à l'anneau de verrouillage 122.

L'extrémité arrière du boîtier 100 est quant à elle munie d'un fût 104 conçu pour recevoir la gaine du flexible.

Cette gaine du flexible est représentée schématiquement sous la référence F sur la figure 4.

Le flexible et la gaine de flexible peuvent être formés de toutes structures connues de l'homme de l'art.

Le boîtier 100 peut loger ou non un capteur de vitesse, c'est-à-dire un capteur apte à générer un signal électrique de fréquence proportionnelle à la vitesse de rotation du flexible.

Un tel capteur de vitesse peut comprendre de façon connue en soi un premier élément de transduction porté par le flexible, par exemple un aimant et un deuxième élément de transduction porté fixe par le boîtier 100, tel que par exemple une sonde à effet Hall.

Sur la figure 4 annexée, une telle sonde à effet Hall est représentée schématiquement sous la référence 150. Cette sonde à effet Hall 150 est portée par un circuit imprimé 152. Selon la représentation de la figure 4, le circuit imprimé 152 a la forme d'une couronne centrée sur l'axe 101 du boîtier et portée sur l'arrière du boîtier. Le circuit imprimé 152 est relié à un circuit d'exploitation extérieure par des liaisons filaires 154 traversant une paroi arrière 106 du boîtier.

Selon la représentation donnée sur la figure 4, le circuit imprimé 152 s'étend transversalement à l'axe 101 du boîtier.

On peut bien entendu envisager de placer le circuit imprimé 152 dans le boîtier 100 parallèlement à l'axe 101.

Le boîtier 100 est de préférence réalisé d'une pièce, par exemple par moulage de matière plastique. Cependant de préférence le boîtier 100 est pourvu au moulage d'au moins une coquille articulée sur le corps de base 120 du boîtier par des zones de plus faibles sections.

L'embout connu commercialisé par la Demanderesse depuis plusieurs années, qui est représenté sur la figure 2 annexée et repris schématiquement sur la figure 4 annexée comprend ainsi deux coquilles 112, 114 venues de moulage avec le corps de base 120 et articulées sur celui-ci autour de zones de faibles sections 113, 115. A la sortie du moule, les coquilles 112, 114 s'étendent généralement transversalement à l'axe 101. Elles peuvent être repliées parallèlement à l'axe 101 par pliage des zones de faiblesse 113, 115. Les coquilles 112, 114 sont verrouillées dans cette position par encliquetage entre elles ou encliquetage sur le corps de base 110. L'utilisation de telles coquilles 112, 114 permet de faciliter l'assemblage du capteur de vitesse 150, 152. L'utilisation de telles coquilles articulées 112, 114 étant connue de l'homme de l'art ne sera pas décrite plus en détail par la suite.

Le manchon 200 est conçu pour être placé sur le boîtier 100 et être déplacé sur celui-ci à translation parallèlement à l'axe 101, entre une position de repos et une position de travail.

En position de repos le manchon 200 n'agit pas sur l'anneau de verrouillage 122.

En revanche, en position de travail le manchon 200 sollicite l'anneau de verrouillage à la déformation vers une forme ovale afin que les dents de verrouillage 127, 128 sortent de la gorge 14. Pour cela en position de travail, le manchon 200 sollicite les zones 129, 130 de l'anneau de verrouillage 122 équidistantes des deux dents 127, 128 vers l'axe 101.

Selon le mode de réalisation préférentiel représenté sur la figure 4 annexée, le manchon 200 est formé d'un cylindre de révolution 202 muni à son extrémité avant 204 et sur sa surface interne 206 de deux dentures internes 210, 212 aptes à solliciter lesdites zones 129, 130 de l'anneau de verrouillage 122.

Comme représenté sur la figure 6 la surface interne 214 des dentures 210, 212 adaptées pour contacter la surface externe de l'anneau de verrouillage, au niveau des zones 129, 130, est avantageusement tronconique. Cette surface interne des dentures 210, 212 converge vers l'axe 101 en direction de l'extrémité libre des dentures 210, 212, c'est-à-dire vers l'avant du manchon 200.

L'homme de l'art comprendra aisément que lorsque le manchon 200 est placé en position avancée de repos sur le boîtier 100, les dentures 210, 212 sont positionnées en avant de l'anneau de verrouillage 122 et ne peuvent agir sur celui-ci. L'anneau 122 est donc cylindrique de révolution et les dents 127, 128 sont placées dans la gorge 14 du canon de la prise de mouvement. Le boîtier 100 est verrouillé sur la prise de mouvement.

Par contre lorsque le manchon 200 est retiré vers l'arrière en position de travail sur le boîtier 100, les dentures 210, 212 viennent prendre appui sur les zones 120, 130 de l'anneau de verrouillage 122. Celui-ci est déformé , il tend à s'ovaliser. Les dents 127, 128 sont déplacées en éloignement de l'axe 101 et sortent de la gorge 14. Le boîtier 100 est alors déverrouillé.

Bien entendu, le manchon 200 doit être plus rigide que l'anneau de verrouillage 122.

Le manchon 200 doit être réalisé en un matériau plus rigide que le boîtier 100, ou présenter une épaisseur supérieure à celui-ci.

Par ailleurs, de préférence l'extrémité arrière 208 du fourreau de verrouillage 200 est munie sur sa surface extérieure de cannelures 209 permettant de faciliter la préhension du fourreau 200 pour commander celui-ci à translation selon l'axe 101. Bien entendu, la longueur du fourreau 200 est adaptée aux contraintes d'encombrement imposées par le véhicule automobile.

De préférence, le fourreau 200 et le boîtier 100 sont réalisés par moulage de matière plastique telle que par exemple de polyamide.

Comme représenté sur la figure 7, le manchon 200 est avantageusement muni sur sa surface interne 206 d'un doigt en saillie 220 conçu pour être placé entre l'anneau de verrouillage 122 et un décrochement 140 formé sur le boîtier 120 au niveau de la zone de raccordement des languettes 124, 126.

Ce doigt 220 permet de limiter le déplacement axial du manchon 200 sur le boîtier 120.

Le rayon interne du sommet du doigt 220 doit pour cela être inférieur au rayon externe de l'anneau de verrouillage 122 ou du décrochement précité formé sur le boîtier 120.

Pour permettre l'engagement du manchon 200 sur le boîtier 100 malgré la présence de ce doigt en saillie 220, la surface interne 222 de celui-ci est avantageusement tronconique, évasée vers l'arrière.

Ainsi le manchon 200 peut être engagé sur le boîtier 100, de l'avant vers l'arrière, par déformation élastique.

Bien entendu la présente invention n'est pas limitée au mode de réalisation particulier qui vient d'être décrit mais s'étend à toutes variantes conformes à son esprit.

Ainsi par exemple, on peut disposer des dentures de déverrouillage sur la surface externe de l'anneau 122, au niveau des zones 129, 130, telles que ces dentures soient sollicitées par des rampes tronconiques prévues à l'avant du manchon et aptes à contacter lesdites dentures lorsque le manchon 200 est tiré vers l'arrière du boîtier 100.

## Revendications

1. Embout de flexible destiné à être fixé sur une prise de mouvement d'indicateur de vitesse comprenant de façon connue en soi un boîtier (100) muni à son extrémité avant d'un anneau de verrouillage (122) pourvu de deux dents en saillie (127, 128) diamétralement opposées aptes à pénétrer dans une gorge (14) d'un canon de la prise de mouvement caractérisé par le fait que l'embout comprend en outre un manchon (200) conçu pour être déplacé à translation sur le boîtier (100) entre une position de repos dans laquelle le manchon (200) n'agit pas sur l'anneau de verrouillage (122) et une position de travail dans laquelle le manchon (200) sollicite l'anneau de verrouillage (122) à la déformation de sorte que les dents de verrouillage (127, 128) sortent de la gorge (14) ménagées dans le canon de la prise de mouvement.

2. Embout selon la revendication 1, caractérisé par le fait que le manchon (200) est formé d'un élément cylindrique de révolution (202) muni de deux dentures internes (210, 212) aptes à solliciter deux régions (129, 130) diamétralement opposées de l'anneau de verrouillage (122) équidistantes desdites dents de verrouillage (127, 128).

3. Embout selon la revendication 2, caractérisé par le fait que la surface interne (214) des dentures (210, 212) prévues sur le manchon (200) est généralement tronconique.

4. Embout selon l'une des revendications 2 et 3, caractérisé par le fait que la surface interne (214) des dentures (210, 212) prévues sur le manchon (200) converge vers l'axe du manchon (200) en direction de leurs extrémités libres.

5. Embout selon la revendication 1, caractérisé par le fait que des dentures sont prévues sur la surface externe de l'anneau (122), au niveau de zones diamétralement opposées (129, 130) de cet anneau et par le fait que le manchon (200) est pourvu de rampes tronconiques aptes à contacter lesdites dentures afin de déformer l'anneau de verrouillage, lorsque le manchon (200) est tiré vers l'arrière du boîtier (100).

6. Embout selon l'une des revendications 1 à 5, caractérisé par le fait que le manchon comprend en outre au moins un doigt (220) en saillie sur sa surface interne, conçu pour être placé entre l'anneau de verrouillage prévu sur le boîtier et un décrochement en saillie formé sur celui-ci pour limiter le déplacement en translation du manchon (200) par rapport au boîtier ( 100).

7. Embout selon l'une des revendications 1 à 6, caractérisé par le fait que le boîtier (100) et le manchon (200) sont réalisés par moulage de matière plastique.

8. Embout selon l'une des revendications 1 à 7, caractérisé par le fait que le boîtier (100) et le manchon (200) sont réalisés par moulage en polyamide.

9. Embout selon l'une des revendications 1 à 8, caractérisé par le fait que le boîtier (100) loge un capteur de vitesse (150, 152).

10. Embout selon l'une des revendications 1 à 9, caractérisé par le fait que l'extrémité arrière du manchon (200) est muni de cannelures (209).

## Patentansprüche

1. Ansatzstück einer flexiblen Welle zur Befestigung an einem Tachometerabtrieb, das in bekannter Weise mit einem Gehäuse (100) versehen ist, welches an seinem vorderen Ende einen Verriegelungsring (122) mit zwei sich diametral gegenüberstehenden, zahnartigen Vorsprüngen (127, 128) zum Eingreifen in eine Nut (14) einer Abtriebshülse aufweist, gekennzeichnet durch eine Manschette (200) zum Verschieben in Längsrichtung auf dem Gehäuse (100) zwischen einer Ruhestellung, in der die Manschette (200) nicht auf den Verriegelungsring (122) einwirkt, und einer Arbeitsstellung, in der die Manschette (200) den Verriegelungsring (122) so verformt, daß die Verriegelungszähne (127, 128) aus der in die Abtriebshülse eingearbeiteten Nut (14) heraustreten.

2. Ansatzstück nach Anspruch 1, dadurch gekennzeichnet, daß die Manschette (200) aus einem drehzylindrischen Element (202) ausgebildet ist, welches zwei innere Verzahnungen (210, 212) aufweist, die auf zwei diametral gegenüberliegende und von den Verriegelungszähnen (127, 128) jeweils einen gleichen Abstand aufweisende Zonen (129, 130) des Verriegelungsrings (122) drücken.

3. Ansatzstück nach Anspruch 2, dadurch gekennzeichnet, daß die Innenfläche (214) der auf der Manschette (200) angebrachten Verzahnungen (210, 212) im allgemeinen kegelstumpfförmig ist.

4. Ansatzstück nach einem der Ansprüche 2 oder 3, dadurch gekennzeichnet, daß die Innenfläche der auf der Manschette (200) angebrachten Verzahnungen (210, 212) in Richtung ihrer freien Enden zur Achse der Manschette (200) hin konvergiert.

5. Ansatzstück nach Anspruch 1, dadurch gekennzeichnet, daß auf der Außenfläche des Rings (122) auf der Höhe der diametral gegenüberstehenden Zonen (129, 130) dieses Rings Verzahnungen angeordnet sind und daß die Manschette (200) kegelstumpfartige, schräge Flächen aufweist, die dazu bestimmt sind, mit den Verzahnungen in Berührung zu kommen, um den Verriegelungsring zu verformen, wenn die Manschette (200) zum hinteren Teil des Gehäuses (100) gezogen wird.

6. Ansatzstück nach einem der Ansprüche 1 bis 5, dadurch gekennzeichnet, daß die Manschette außerdem wenigstens einen einen vorspringenden Finger (220) auf ihrer Innenfläche aufweist, der in eine Stellung zwischen dem auf dem Gehäuse vorgesehenen Verriegelungsring und einem auf diesem ausgebildeten vorspringenden Absatz zu bringen ist, um die Verschiebung in Längsrichtung der Manschette (200) relativ zum Gehäuse (100) zu begrenzen.

7. Ansatzstück nach einem der Ansprüche 1 bis 6, dadurch gekennzeichnet, daß das Gehäuse (100) und die Manschette (200) durch Abformen aus Kunststoffmaterial hergestellt sind.

8. Ansatzstück nach einem der Ansprüche 1 bis 7, dadurch gekennzeichnet, daß das Gehäuse (100) und die Manschette (200) durch Abformen aus Polyamid hergestellt sind.

9. Ansatzstück nach einem der Ansprüche 1 bis 8, dadurch gekennzeichnet, daß das Gehäuse (100) einen Geschwindigkeitsaufnehmer (150, 152) aufnimmt.

10. Ansatzstück nach einem der Ansprüche 1 bis 9, dadurch gekennzeichnet, daß das hintere Ende der Manschette (200) mit Rillen (209) versehen ist.

## Claims

1. Connector for a flexible cable intended to be fixed to a speedometer movement pick-up comprising, in a manner known per se, a housing (100) provided, at its front end, with a locking ring (122) with two diametrically opposed projecting teeth (127, 128) able to enter a recess (14) in a barrel on the movement pick-up, characterised by the fact that the connector also comprises a sleeve (200) designed so as to be moved in translation on the housing (100) between a position of rest in which the sleeve (200) does not act on the locking ring (122) and an operating position in which the sleeve (200) acts on the locking ring (122) and deforms it so that the locking teeth (127, 128) come out of the recess (14) provided in the movement pick-up barrel.

2. Connector according to Claim 1, characterised by the fact that the sleeve (200) consists of a cylindrical member (202) with two internal sets of teeth (210, 212) able to act on two diametrically opposed areas (129, 130) of the locking ring (122) equidistant from the said locking teeth (127, 128).

3. Connector according to Claim 2, characterised by the fact that the internal surface (214) of the sets of teeth (210, 212) provided on the sleeve (200) is tapered in shape overall.

4. Connector according to one of Claims 2 and 3, characterised by the fact that the internal surface (214) of the sets of teeth (210, 212) provided on the sleeve (200) converges towards the axis of the sleeve (200) in the direction of their free ends.

5. Connector according to Claim 1, characterised by the fact that sets of teeth are provided on the external surface of the ring (122), at the level of diametrically opposed areas (129, 130) on this ring and by the fact that the sleeve (200) is provided with tapered slopes able to contact the said sets of teeth in order to deform the locking ring, when the sleeve (200) is drawn towards the rear of the housing (100).

6. Connector according to one of Claims 1 to 5, characterised by the fact that the sleeve also comprises at least one finger (220) projecting from its internal surface, designed so as to be located between the locking ring provided on the housing and a projection formed on the latter in order to limit the translational movement of the sleeve (200) with respect to the housing (100).

7. Connector according to one of Claims 1 to 6, characterised by the fact that the housing (100) and sleeve (200) are produced by moulding a plastic.

8. Connector according to one of Claims 1 to 7, characterised by the fact that the housing (100) and sleeve (200) are produced by moulding a polyamide.

9. Connector according to one of Claims 1 to 8, characterised by the fact that the housing (100) houses a speed sensor (150, 152).

10. Connector according to one of Claims 1 to 9, characterised by the fact that the rear end of the sleeve (200) is provided with flutes (209).
